# EUROPÄISCHE PATENTSCHRIFT

(11) **EP 2 643 609 B1**
(45) Veröffentlichungstag und Bekanntmachung des Hinweises auf die Patenterteilung: **14.01.2015**
(21) Anmeldenummer: 11758364.1
(22) Anmeldetag: 20.05.2011
(51) Int. Cl.: F16D 3/78

(54) **Verspanneinrichtung einer Welle-Nabe-Verbindung**
Prestressing device of a shaft-hub connection
Dispositif de précontrainte d'un accouplement arbre-moyeu

(30) Priorität: 24.11.2010 DE 102010052213
(43) Veröffentlichungstag der Anmeldung: 02.10.2013
(73) Patentinhaber: Schaeffler Technologies GmbH & Co. KG, 91074 Herzogenaurach (DE)
(72) Erfinder: VOGEL, Florian, 77815 Bühl (DE)
(86) Internationale Anmeldenummer: PCT/DE2011/001111
(87) Internationale Veröffentlichungsnummer: WO 2012/069028

(56) Entgegenhaltungen:
- WO-A1-2008/046379
- WO-A2-2007/000140
- WO-A2-2007/000151
- DE-A1-102009 030 976
- DE-A1-102009 033 864

## Beschreibung

Die Erfindung betrifft eine Verspanneinrichtung für eine Welle-Nabe-Verbindung in einer Drehmomentübertragungsvorrichtung in einem Antriebstrang, eines Fahrzeuges.

Ein Verspannsystem ist beispielsweise aus der WO 2007/000140 in Form eines Kupplungssystems bekannt. Dieses Verspannsystem weist ein eine Außenverzahnung aufweisendes Wellenelement in Form eines Zahnkranzes einer Kupplung und ein eine Innenverzahnung aufweisendes Nabenelement in Form eines Flansches eines Dämpfers auf. Um eine einwandfreie Drehmomentübertragung zwischen dem Wellenelement (Zahnkranz) und dem Nabenelement (Dämpferflansch) mit möglichst reduzierten Anschlags- bzw. Klappergeräuschen aufgrund von Torsionsschwingungen zu erreichen, weist das Wellenelement mehrere Aussparungen aufweist, in welchen jeweils ein Federelement angeordnet ist, welches Federarme aufweist, die in die Innenverzahnung des Nabenelements eingreifen und dadurch ein Verspannen des Wellenelements mit dem Nabenelement realisieren. Nachteilig bei diesem Verspannsystem ist jedoch der hohe konstruktive Aufwand, indem zunächst Aussparungen in das Wellenelement eingebracht werden müssen, wodurch zusätzliche Kosten aufgrund der notwendigen Bearbeitung des Wellenelements entstehen.

Aufgabe der Erfindung ist es daher, eine Verspanneinrichtung für eine Welle-Nabe-Verbindung der Eingangs genannten Art anzugeben, welches sich durch verringerte Herstellungskosten auszeichnet.

Diese Aufgabe wird erfindungsgemäß gelöst durch eine Verspanneinrichtung für eine Welle-Nabe-Verbindung mit den Merkmales des Patentanspruches 1 gelöst.

Bevorzugte Ausbildungen sind Gegenstand der abhängigen Patentansprüche.

Die vorliegende Verspanneinrichtung ist insbesondere für Drehmomentübertragungsvorrichtungen, bestehend aus Drehschwingungsdämpfer (wie einem ZMS) und Kupplung (insbesondere einer Doppelkupplung) verwendbar, wobei ein ausgangsseitiger Flansch des Drehschwingungsdämpfers (als einem Beispiel eines Nabenelements) und ein Mitnehmerzahnkranz an einem Mitnehmerring der Doppelkupplung (als einem Beispiel eines Wellenelements) eine axiale Steckverzahnung bilden, und wobei die vorliegende Verspanneinrichtung eine Drehmomentübertragung zwischen ZMS und Doppelkupplung bei Möglichkeit eines axialen Toleranzausgleiches bietet.

Nachfolgend wird die Erfindung unter Bezugnahme auf die beiliegenden Zeichnungen anhand bevorzugter Ausführungsbeispiele näher erläutert. In diesen zeigen:
- Fig. 1: einen Halbschnitt eines Drehmomentübertragungssystems in einem Antriebstrangs eines Kraftfahrzeuges mit einem ersten Verspannsystem (=Verspannblech) zwischen einem ausgangsseitigen Flansch eines ZMS (=Nabenelement) und einem Mitnehmerring (=Wellenelement) einer (Doppel- )Kupplung;
- Fig. 2: eine vergrößerte Darstellung der bei Figur 1 vorhandenen Steckverbindung,
- Fig. 3: eine räumliche Darstellung eines ZMS Ausgangsflansches (=Nabenelement) und eines Mitnehmerringes (=Wellenelement) entsprechend dem Drehmomentübertragungssystems nach Fig. 1, wobei als ein alternatives zweites Verspannsystem nicht Teil der Erfindung am ZMS Ausgangsflansch ein Zahnring 110 über Befestigungsstege 118 befestigt ist, und wobei am Zahnring eine Innenverzahnung vorgesehen ist, die in eine Außenverzahnung eines Mitnehmerringes eingreift,
- Fig. 4: eine räumliche Darstellung des Zahnrings aus Fig. 2,
- Fig. 5: eine Draufsicht auf Zahnring, ZMS Ausgangsflansch und Mitnehmerzahnkranz im Bereich der Verzahnungen derselben,
- Fig. 6: eine Draufsicht auf ein weiteres Ausführungsbeispiel nicht Teil der Erfindung der Verspanneinrichtung mit Durchgriffen der Befestigungsstege durch den ZMS-Ausgangsflansch in räumlicher Ansicht,
- Fig. 7: eine vergrößerte Darstellung des Ausführungsbeispiel nach Fig. 6,
- Fig. 8: die Darstellung nach Fig. 6 in vergrößerter Darstellung aus Blickwinkel einer "Vorderseite" des ZMS-Flansches
- Fig. 9: die Darstellung nach Fig. 6, aus Blickrichtung der "Rückseite" des ZMS-Ausgangsflansches,
- Fig. 10: eine räumliche Darstellung des ZMS-Ausgangsflansches mit Durchbrüchen als Durchgriffsmöglichkeit für die Befestigungsstege sowie Durchbrüchen zur Bildung der formschlüssigen Verbindung zwischen Zahnring und ZMS-Ausgangsflansch,
- Fig. 11: eine räumliche Darstellung eines Teilbereiches des Zahnringes mit der Darstellung der Befestigungsstege sowie der Halteeinrichtung,
- Fig. 12: eine vergrößerte Darstellung des Verspannsystems mit "eingerasteter" Halteeinrichtung sowie einer Darstellung der Nietverbindung zwischen Befestigungssteg und ZMS-Ausgangsflansch,
- Fig. 13: eine andere perspektivische Darstellung der Verspanneinrichtung im vorgespannten Zustand (d.h. bei eingerasteter Halteeinrichtung),

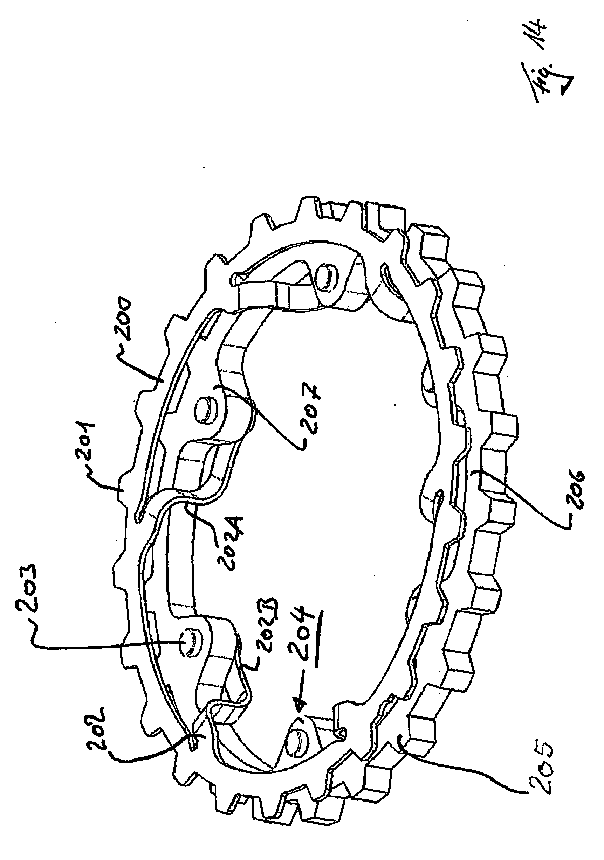

- Fig. 14: eine perspektivische Darstellung eines erfinderischen Ausführungsbeispieles der Verspanneinrichtung mit einem Zahnring mit Außenverzahnung (die in eine Innenverzahnung des ZMS - Ausgangsflansches eingreift) und blattfederartigen Befestigungszungen (die an einer Welle befestigt sind, welche eine Außenverzahnung aufweist), wobei der innenverzahnte ZMS - Ausgangsflansch und die außenverzahnte Welle eine Steckverzahnung bilden, die über den außenverzahnten und innen angebundenen Zahnring aufgrund einer durch die Befestigungszungen erzeugten tangential wirkenden Kraft verspannt ist, und wobei aus Gründen einer übersichtlichen Darstellung der ZMS - Ausgangsflansch ausgeblendet ist, und
- Fig. 15: eine Draufsicht auf das Ausführungsbeispiel nach Fig. 14, wobei der ZMS-Ausgangsflansch durch ein kreisringförmiges Element symbolisiert ist.

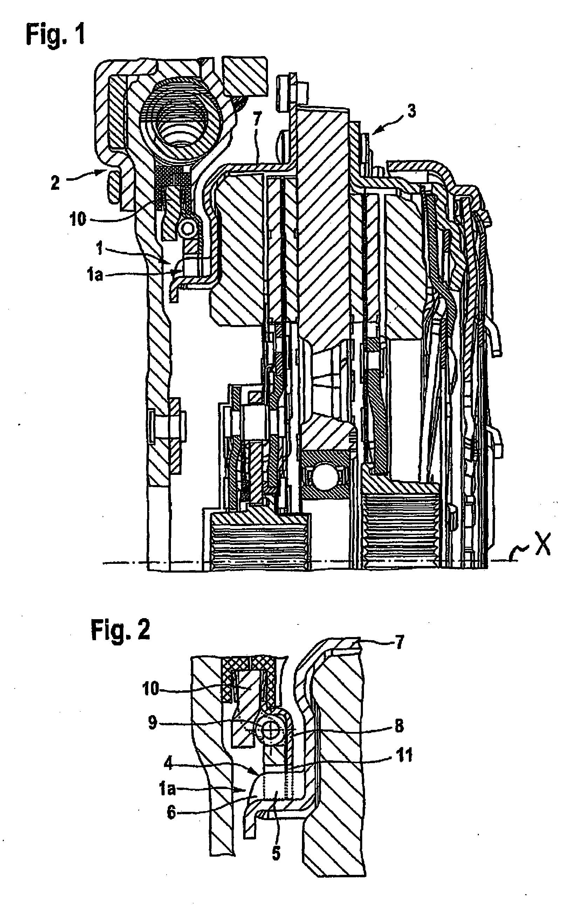

In Figur 1 ist eine Antriebsverbindung 1 dargestellt, die als axiale Steckverbindung 1a ausgebildet ist. Über diese axiale Steckverbindung 1a sind zwei Untereinheiten 2 und 3 miteinander verbindbar, von denen die Untereinheit 2 einen Dämpfer bildet, der mit der Abtriebswelle einer Brennkraftmaschine verbindbar ist, und die Untereinheit 3 bei dem dargestellten Ausführungsbeispiel eine Doppelkupplung beinhaltet, die getriebeseitig vormontierbar ist.

Die axiale Steckverbindung 1a ist, wie in Zusammenhang mit Figur 2 erkennbar, durch eine Verzahnungsverbindung 4 gebildet, welche Verzahnungsprofile 5 und 6 aufweist, die ineinander greifen. Die Verzahnungsprofile 5 sind bei dem dargestellten Ausführungsbeispiel von einem flanschartigen Ausgangsteil 10 des Dämpfers 2 getragen und die Verzahnungsprofile 6 von einem Mitnehmerring 7, der Bestandteil der getriebeseitig vormontierten Untereinheit 3 ist. Die Verzahnungsprofile 5 bilden eine Innenverzahnung, wohingegen die Verzahnungsprofile 6 eine entsprechend angepasste Außenverzahnung bilden.

Um eine umfangsmäßige Verspannung der Verzahnungsprofile 5 und 6 zu gewährleisten, ist ein Verspannungselement 8 vorgesehen, das in Umfangsrichtung durch wenigstens einen Energiespeicher 9, der hier als Schraubendruckfeder ausgebildet ist, beaufschlagt wird. Der Energiespeicher 9 kann jedoch auch anders ausgebildet sein, beispielsweise könnte das hier ringförmig ausgebildete Verspannungselement 8 biegebalkenähnliche Arme aufweisen, die elastisch vorgespannt sind und eine Umfangskraft zumindest auf das Verspannungselement 8 erzeugen. Derartige Arme können mit entsprechender Vorspannung an dem Bauteil 10 abgestützt werden. Der Energiespeicher 9 ist zwischen den Bauteilen 10 und 8 in Umfangsrichtung verspannt verbaut

Das Verspannungselement 8 bildet bzw. trägt zumindest einzelne Profilierungen bzw. Bereiche 11, die geeignet sind, mit Profilen bzw. Zähnen des Verzahnungsprofiles 6 zusammenzuwirken, indem sie mit Vorspannung an Flanken derartiger Profile bzw. Zähne zur Anlage kommen.

Bei dem dargestellten Ausführungsbeispiel bilden die Bereiche 11 zunächst axial verlaufende Abschnitte 12, die ausgehen von dem ringförmigen Grundkörper 13 des Verspannungselementes 8. Auf der dem Grundkörper 13 abgewandten Seite des die Verzahnungsprofile 5 aufweisenden Bauteils 10 gehen die Abschnitte 12 in eine in Umfangsrichtung verlaufende Lasche 13 über. Die Laschen 13 gewährleisten einen axialen Zusammenhalt zwischen den beiden Bauteilen 8 und 10.

Das Verspannungselement 8 (=Verspannblech) ist vor und während der Bildung der Steckverbindung 1a entgegen der zum Beispiel mittels Energiespeichem 9 erzeugten umfangsmäßigen Verspannkraft in einer winkelmäßig zurückgezogenen Lage gegenüber den Verzahnungsprofilen 5 gesichert. Diese zurückgezogene Lage gewährleistet, dass die Verzahnungsprofile 5 und 6, welche die Antriebsverbindung 1 bilden, frei axial ineinander geschoben werden können.

In den Fig. 1 und 2 ist also ein Verspannsystem mit einem in Umfangsrichtung vorbelasteten Verspannblech zwischen einem ausgangsseitigen Flansch eines ZMS und einem Mitnehmerring einer (Doppel-)Kupplung gezeigt, wobei zwischen ZMS Ausgangsflansch und Mitnehmerring eine axiale Steckverzahnung vorgesehen ist, um ein Drehmoment zwischen ZMS und Kupplung zu übertragen, zur Vermeidung von Klappern dieser axialen Steckverzahnung aufgrund von Fertigungstoleranzen und Drehmomentschwankungen. Dementsprechend ist ein in Umfangsrichtung über Federn vorbelasteter und eine Innenverzahnung aufweisender Verspannring vorgesehen, wobei die Federn dabei zwischen Verspannring und ZMS Ausgangsflansch angeordnet sind, und wobei die Zähne des Verspannrings außerdem in die Außenverzahnung des Mitnehmerringes eingreifen, so dass das von den Federn erzeugte Verspannmoment zwischen ZMS Ausgangsflansch und Mitnehmerring wirkt. Nachfolgend wird nun ein alternatives Ausführungsbeispiel einer Verspanneinrichtung erläutert, das zur Verspannung der vorstehend beschriebenen axialen Steckverzahnung oder einer axialen Steckverzahnung an einer anderen Stelle insbesondere in einem Antriebsstrang eines Fahrzeuges verwendet werden kann.

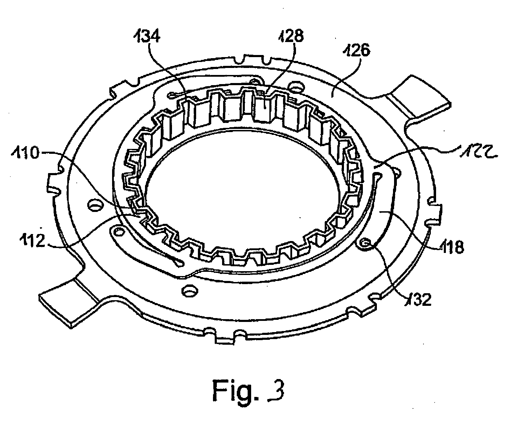

Der in Fig. 3 gezeigte Zahnring 110 (nachfolgend teilweise auch als "Klemmfeder" bezeichnet), welcher zum Verspannen von ZMS Ausgangsflansch und Mitnehmerring (oder eines vergleichbaren Eingangsbereichs der Doppelkupplung) verwendet wird, weist einen im Wesentlichen rotationssymmetrischen Grundkörper mit Innenverzahnung 112 an seiner Innenumfangsfläche 114 und mehrere blattfederartig ausgebildete Befestigungsstege 118 (=nachfolgend auch als "Befestigungszungen" bezeichnet) an seiner Außenumfangsfläche 116 auf.

Wie in Fig. 3 gezeigt ist der Zahnring 110 über die Befestigungsstege 118 und Nietverbindungen am ZMS Ausgangsflansch 126 befestigt.

Wie weiterhin in Fig. 3 gezeigt, greift die Innenverzahnung 112 des Zahnrings 110 in eine Außenverzahnung eines Zahnkranzes 134 ein, der an einem Mitnehmerring einer Doppelkupplung befestigt ist. Die vorliegende Lehre ist dabei nicht auf die Verwendung des Zahnringes zur Verspannung eines ZMS und einer Doppelkupplung beschränkt, vielmehr kann hier eine Verspannung zwischen ZMS Ausgangsflansch und einer Einzelkupplung vorgesehen sein. Weiterhin ist auch die Verspannung jeglicher anderer Art an axialer Steckverzahnung, beispielsweise zwischen einer Kupplungsscheibe und der zugehörigen Getriebeeingangswelle von der vorliegenden Lehre umfaßt. Zur klareren Darstellung der Welle-Nabe-Verbindung ist der Mitnehmerring in der Darstellung von Fig. 3 weggelassen worden.

ZMS Ausgangsflansch 126 und Mitnehmerring bzw. Zahnkranz 134 in Verbindung mit dem Mitnehmerring bilden dabei eine Welle-Nabe-Verbindung im Sinne der vorliegenden Lehre, wobei eine Verspannung dieser Verbindung durch den Zahnring 110 erfolgt. Dabei erzeugen die Befestigungsstege 118 im montierten Zustand, d.h. also in einem Zustand, in dem die axiale Steckverzahnung zwischen Ausgangsflansch 126 und Zahnkranz 134 hergestellt ist, eine in Umfangsrichtung wirkende Kraft (nachfolgend auch als "tangential Kraft" bezeichnet), welche über die Innenverzahnung des Zahnringes 110 ein Verspannmoment in Umfangsrichtung zwischen ZMS Ausgangsflansch und Mitnehmerring erzeugt, über welches die axiale Steckverzahnung zwischen Ausgangsflansch und Mitnehmerring vorgespannt wird.

Der hier gezeigte Zahnring 110 weist drei blattfederartige Stegelemente 118 auf, wobei es ebenfalls vorgesehen sein kann, dass zwei oder mehr als drei blattfederartige Stegelemente 118 an dem Zahnring 110 angeordnet sein können. Auch könnten die radiale Anordnung von Stegelementen 118 und Verzahnung 112 getauscht werden, so dass dann ein Grundkörper mit Außenverzahnung und an der Innenumfangsfläche vorgesehene Stegelemente vorgesehen wären.

Die Stegelemente 118 sind an einem Ende 122 (nachfolgend auch als "zweites Ende" der Stegelemente bezeichnet) unmittelbar am Grundkörper angebunden, wobei vorliegend eine einstückige Ausbildung vorgesehen ist. Alternativ könnten die Stegelemente auch als separate Bauteile ausgebildet sein, welche mit dem Grundkörper beispielsweise über Nietverbindungen verbunden werden.

Die blattfederartigen Stegelemente 118 sind im Umfangsrichtung betrachtet vorzugsweise bogenförmig ausgebildet, so dass sie entlang zumindest eines Teilbereichs der Außenumfangsfläche 116 des Zahnringes 110 verlaufen.

An einem weiteren Ende (nachfolgend auch als "erstes Ende" der Stegelemente bezeichnet), welches dem zweiten Ende 122 der Stegelemente 118 gegenüberliegt, ist jeweils eine Bohrung 132 vorgesehen, über welche der Zahnring 110 mit dem ZMS Ausgangsflansch (= dem Nabenelement im Sinne der vorliegenden Lehre) 126 oder dem Zahnkranz des Mitnehmerringes (=dem Wellenelement im Sinne der vorliegenden Lehre) 128 verbunden werden kann, beispielsweise mittels einer Nietverbindung.

Aus Fig. 3 ist weiter ersichtlich, dass die Stegelemente 118 auch eine Krümmung in axialer Richtung des Zahnringes 110 aufweisen. Ist der Zahnring 110 mit dem ZMS Ausgangsflansch 126 verbunden, so bedeutet dies, dass der Grundkörper des Zahnrings 110 und der Ausgangsflansch in unterschiedlichen axialen Ebenen angeordnet sind.

Die Stegelemente 118 des Zahnringes 110 weisen materialbedingt und/oder aufgrund der gekrümmten Form eine bestimmte Elastizität, insbesondere entlang ihrer Längsachse, auf, wobei die Länge der Stegelemente 118 bei der axialen Bewegung und der Verdrehung des Zahnringes 110 im Wesentlichen konstant bleibt. Dabei ist der Zahnring 110 vorzugsweise aus einem dünnen flexiblen Blech (Federstahl) ausgebildet. Die Stegelemente (nachfolgend auch als Befestigungszungen bezeichnet) können auch in Längsrichtung betrachtet Wellen oder sonstige Deformationen oder auch in Breitenrichtung betrachtet Verjüngungen aufweisen zur Einstellung der Elastizität der Federzungen.

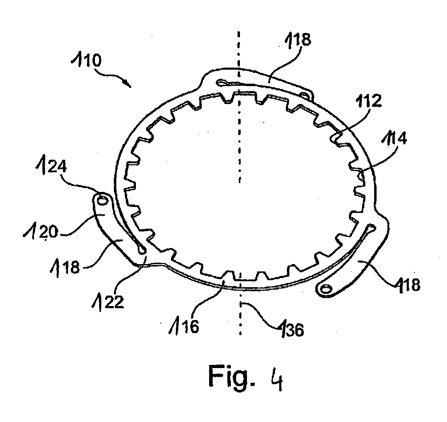

In Fig. 4 ist der Zahnring 110 in einer räumlichen Darstellung wiedergegeben.

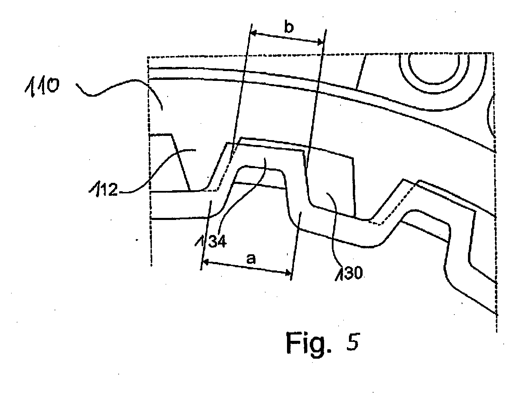

In Fig. 5 ist die Welle-Nabe-Verbindung zwischen ZMS Ausgangsflansch und Mitnehmerring in einem noch nicht verspannten Zustand gezeigt, wobei der die Außenverzahnung 134 aufweisende Mitnehmerzahnkranz 128 zwischen einem Spalt der Innenverzahnung 112 des Zahnrings 110 und der Innenverzahnung 130 des ZMS Ausgangsflansches 126 eingreifen soll. Fig. 5 zeigt hierbei eine vergrößerte Darstellung der Welle-Nabe-Verbindung aus Fig. 3, wobei die Zahnbreite a des Zahnkranzes 128 des Mitnehmerringes der Kupplung im Verhältnis zum Spalt b zwischen einem Zahn der Verzahnung 112 des Zahnrings 110 und einem Zahn der Verzahnung 130 des ZMS Ausgangsflansches 126 gezeigt ist. Zur Montage der Welle-Nabe-Verbindung können Zahnkranz 128 und Flansch 126 axial aufeinander zu bewegt werden. Da sich der Zahnring 110 über die Befestigungsstege 118 am Ausgangsflansch 126 und die Verzahnung des Zahnkranzes am Mitnehmerring abstützt kommt es zu einer Verspannung, so dass eine Vorspannung der Welle-Nabe-Verbindung realisiert wird. Bevor der verspannte Zustand erreicht wird, weist der Spalt b eine wesentlich geringere Breite auf als die Zahnbreite a des Zahnkranzes 128. Erst durch eine axiale Bewegung des Zahnrings 110 entlang seiner Rotationsachse 136 und die dadurch hervorgerufene Verdrehung des Zahnrings 110 tangential zu seiner Rotationsachse 136 wird der Spalt b zwischen dem Zahn der Verzahnung 112 des Zahnrings 110 und dem Zahn der Innenverzahnung 130 des Flansches 126 derart vergrößert, dass der Spalt b im Wesentlichen die gleiche Breite aufweist wie die Zahnbreite a des Zahnkranzes 128. Der Zahn der Außenverzahnung 134 des Zahnkranzes 128 wird somit zwischen einem Zahn der Verzahnung 112 des Zahnrings 110 und einem Zahn der Innenverzahnung 130 des ZMS Flansches 126 festgeklemmt.

Bei dieser Art der Montage ist allerdings eine Montagekraft aufzubringen, mit der der Zahnring gegen die Wirkung der Befestigungsstege verdreht wird. Die Montagekraft ist daher von der zu erzeugenden Verspannkraft und damit vom Anwendungsfall abhängig. Wird eine sehr hohe Verspannkraft benötigt, so kann alternativ zu vorstehendem Ausführungsbeispiel eine kraftlose Montage vorgesehen werden, die nachstehend noch im Einzelnen erläutert wird.

Zur Erleichterung der Montage können die Zähne der Außenverzahnung 134 des Mitnehmerringes 128 an ihrer Stirnseite eine angeschrägte Fase aufweisen. Die Montagekraft zur Befestigung der Zähne der Außenverzahnung 134 des Mitnehmerzahnkranzes 128 in dem Spalt zwischen den Zähnen der Verzahnung 112 des Zahnrings 110 und der Zähne der Innenverzahnung 130 des ZMS Ausgangsflansches 126 steigt damit erst während der Montage selbst an.

Befestigt werden kann der Zahnring 110 am Flansch 126 mittels Nieten 141, welche in Bohrungen 124 des Zahnrings 110 und in am Flansch 126 vorgesehenen Bohrungen angeordnet sind.

Der Mitnehmerring ist hierbei vorzugsweise eine Eingangsseite einer Doppelkupplung. Diese Welle-Nabe-Verbindung ist daher als Verspannsystem in Doppelkupplungen einsetzbar (wobei die vorliegende Lehre nicht hierauf beschränkt ist, sondern vielmehr die Verspannung allgemein von axialen Steckverzahnungen betroffen ist). Mit diesem Verspannsystem ist es insbesondere möglich, Geräusche im Fahrzeug, die durch das Spiel in der Welle-Nabe-Verbindung zwischen Doppelkupplungsdämpfer und Doppelkupplungsgetriebe entstehen, insbesondere in Form von Verzahnungsklackem, zu eliminieren.

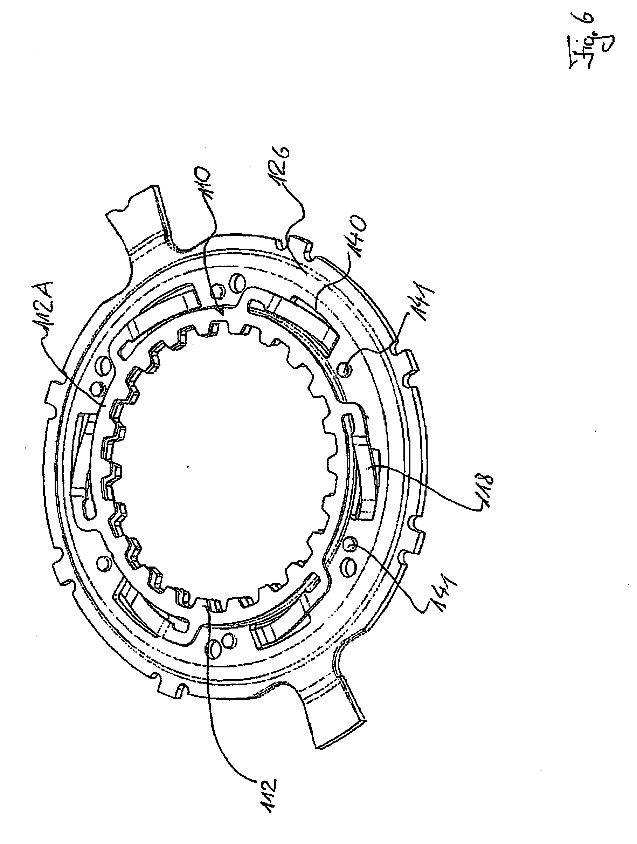

Wie Figur 6 entnehmbar, kann gemäß einem bevorzugten Ausführungsbeispiel der ZMS-Ausgangsflansch 126 Durchgriffe 140 aufweisen, durch welche die Befestigungsstege 118 hindurchgreifen, so dass der Grundkörper 112A mit den Zähnen 112 und das am ZMS Flansch befestigte Ende der Befestigungsstege 118 auf gegenüberliegenden Seitenflächen des ZMS-Flansches 126 in axialer Richtung betrachtet) angeordnet sind. Diese Durchgriffe ermöglichen dabei eine Vergrößerung des Federweges der Befestigungsstege und damit insbesondere eine Erhöhung der Vorspannkraft. In Fig. 6 sind zudem die Nietverbindungen 141 gezeigt, über welche die Befestigungsstege 118 am ZMS-Ausgangsflansch 126 angeordnet sind.

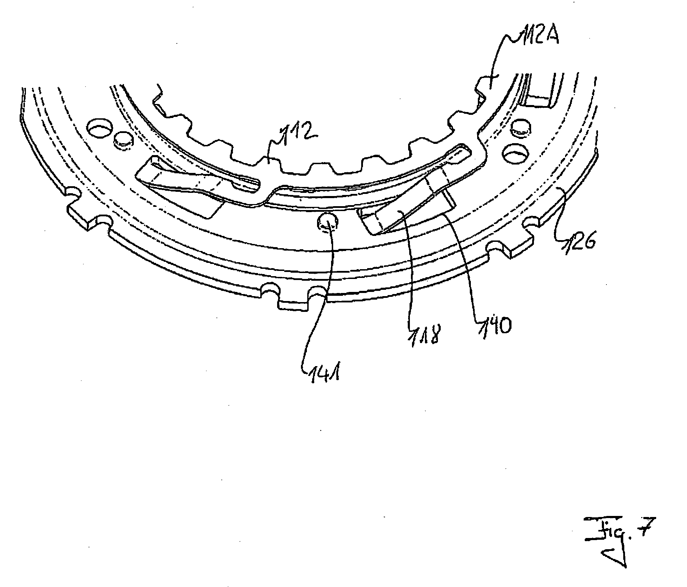

In Figur 7 ist eine vergrößerte Darstellung eines Teilbereiches der Verspanneinrichtung nach Fig. 6 gezeigt, wobei gerade der perspektivischen Darstellung von Fig. 7 entnehmbar ist, dass in axialer Richtung der Drehmomentübertragungseinrichtung betrachtet, der Grundkörper 112A axial beanstandet ist zur gegenüberliegenden Seitenfläche des ZMS-Ausgangsflansches 126. Wird dieser Grundkörper 112A des Zahnringes110 in axialer Richtung verlagert beispielsweise durch Herstellung der axialen Steckverzahnung zwischen ZMS-Ausgangsflansch und Mitnehmerring, wird der Zahnring 110 in Umfangsrichtung verdreht, so dass ein Winkel der Zähne 112 des Zahnringes 110 relativ zu den Zähnen der Verzahnung des ZMS-Ausgangsflansches und auch relativ zu den Zähnen der Verzahnung des Mitnehmerrings der (Doppel-)Kupplung verändert wird.

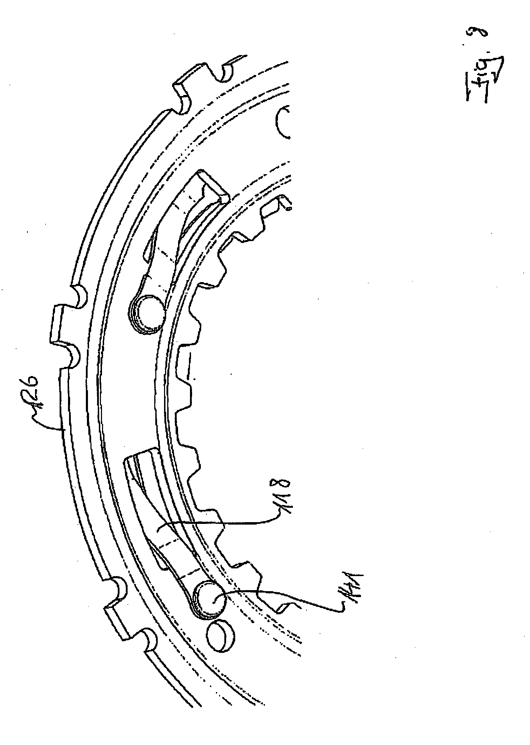

In Figur 8 ist der Ausschnitt gemäß Fig. 7 von der gegenüberliegenden Seite (vorliegend derer Motorseite) des ZMS-Ausgangsflansches 126 aus betrachtet dargestellt. Wiederum sind die Befestigungsstege 118 mit deren angenieteten Ende 141 dargestellt, wobei in dieser Blickrichtung die Zähne der Verzahnung des ZMS-Ausgangsflansches und nicht mehr die Zähne des Zahnringes 110 sichtbar sind.

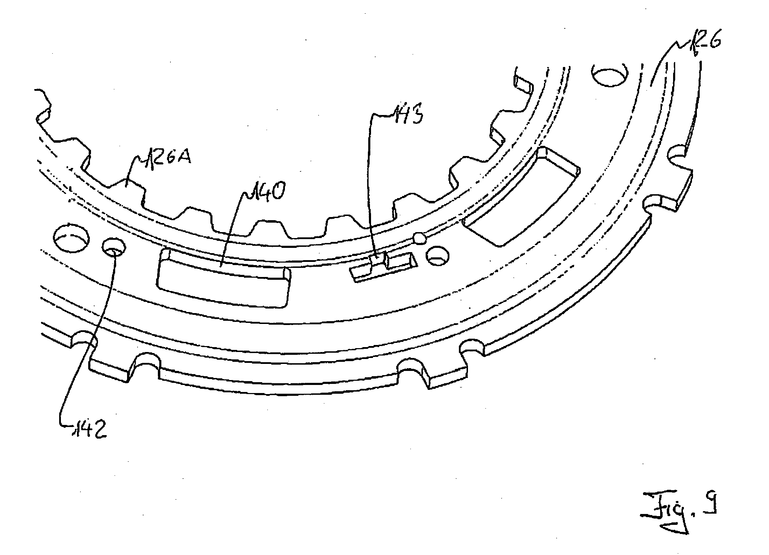

In der perspektivischen Darstellung von Figur 9 ist zur Verdeutlichung der Situation ein Teilbereich des ZMS-Ausgangsflansches alleine, also ohne den angenieteten Zahnring, abgebildet, damit die Durchbrüche 140 und die Zähne 126A der Verzahnung des ZMS-Ausgangsflansches 126 klarer ersichtlich sind.

Weiterhin sind Figur 9 neben den Durchbrüchen 140 weitere Durchbrüche 142 ersichtlich, welche zur Herstellung der Nietverbindung 141 zur Befestigung der Befestigungsstege vorgesehen sind.

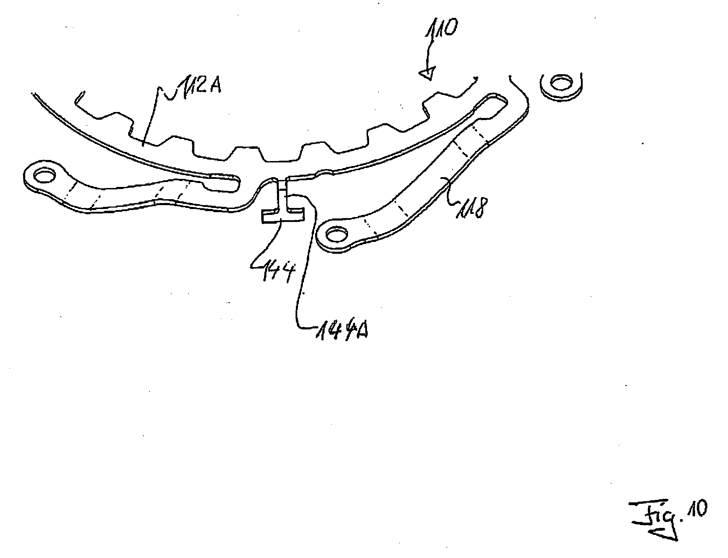

Nachfolgend wird nun im Zusammenhang mit den Fig. 9 ff. ein weiteres bevorzugtes Ausführungsbeispiel beschrieben, mit dem ein kraftfreies Montieren der axialen Steckverzahnung ermöglicht ist. Dabei sind Fig. 9 Durchbrüche 143 entnehmbar, welche Teil einer Halteeinrichtung zur Sicherung einer gedrehten Lage des Zahnringes in einem vormontieren Zustand sind. Diese in Fig. 9 gezeigten Durchbrüche 143 sind im Wesentlichen mit einem rechteckförmigen Querschnitt ausgebildet, wobei entlang einer der längeren Seiten dieses Rechteckes eine weitere Vertiefung vorgesehen ist. Diese in Fig. 9 gezeigten Durchbrüche 143 korrespondieren zu Haltenasen 144, welche am Grundkörper 112A des Verzahnungsringes 110 vorzugsweise benachbart zu den Befestigungsstegen 118 ausgebildet sind. Die Form dieser Haltenasen 144 ist dabei "von vorne betrachtet" ebenfalls rechteckförmig und derart ausgebildet, dass diese in die Durchbrüche 143 im ZMS-Ausgangsflansch 126 eingreifen können. Die Haltenasen weisen hierfür einen verbreiterten Kopfbereich sowie einen vergleichsweise schmalen Halsbereich auf, wobei dieser Halsbereich 144A in die vorstehende beschriebene Ausbuchtung in der Längsseite des rechteckförmigen Durchbruches 143 eingreifen kann, wie in Fig. 10 dargestellt. Über diese Halteeinrichtung kann der Zahnring in einer relativ zum ZMS-Ausgangsflansch und/oder relativ zum Mitnehmerring vorgespannten Montageposition fixiert werden. Es ist daher also nicht notwendig, dass die Verdrehung des Zahnringes erst während der Montage durchgeführt wird. Vielmehr kann der Zahnring auch vor der Montage verdreht und in dieser gedrehten Stellung fixiert werden, so dass eine kraftfreie Montage ermöglicht ist.

In Fig. 10 ist der Zahnring 110 als ein Ausführungsbeispiel mit den Haltenasen 144 perspektivisch dargestellt. Es ist ersichtlich, dass gemäß diesem Ausführungsbeispiel Befestigungsstege 118, Haltenasen 144, Zähne der Verzahnung und der Grundkörper 112A aus einem Federstahlblech ausgeformt sind, so dass sich eine überaus preiswerte Verspanneinrichtung ergibt.

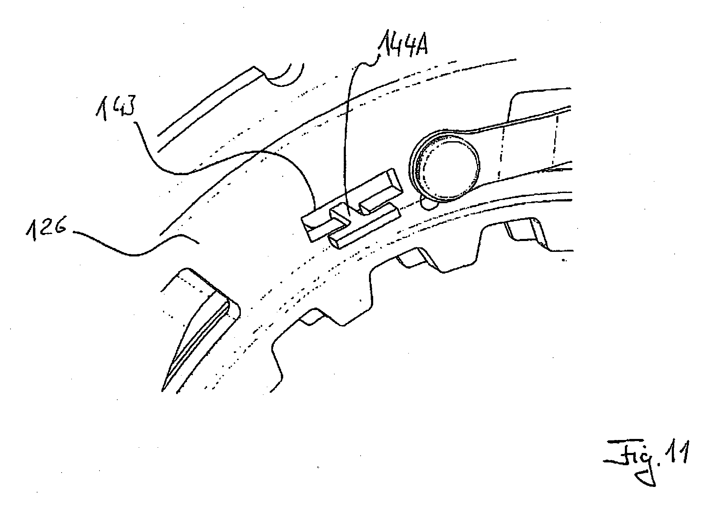

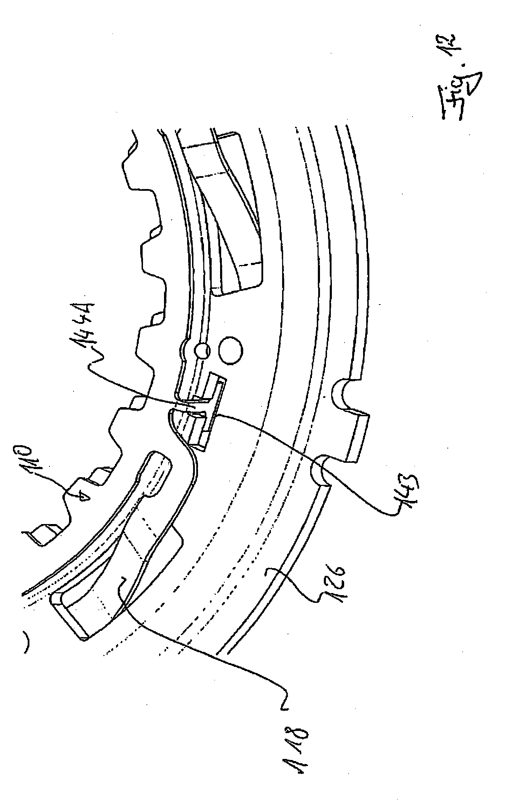

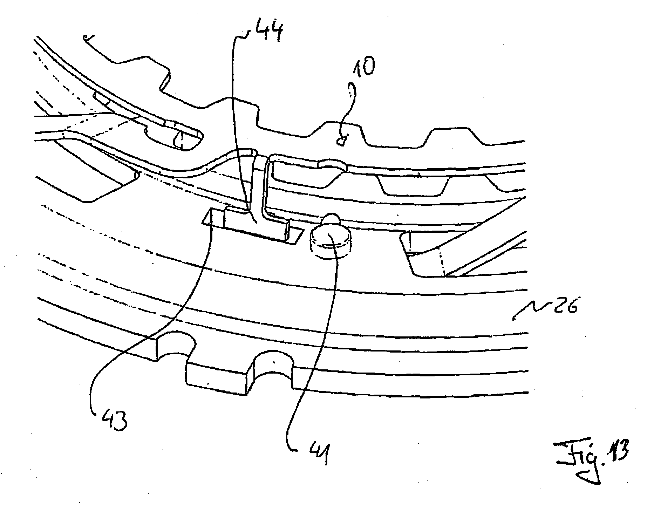

In Fig. 11 ist - betrachtet von der einen Seite des ZMS-Ausgangsflansches 26 - dargestellt wie die Haltenasen 144 des Zahnringes in die Durchbrüche im ZMS Ausgangsflansch eingreifen, um den Zahnring in dieser gegen die Ausgangsstellung bei Herstellung der Vernietung zwischen Befestigungsstegen und Flansch verdrehten Stellung zu fixieren. In Fig. 12 ist dies betrachtet von der gegenüberliegenden Seite des ZMS-Ausgangsflansches 26 nochmals dargestellt. In dieser verdrehten (Montage-)Stellung können die Zahnlücken und Zahnweiten derart gewählt sein, dass die Welle-Nabe-Verbindung kraftfrei montiert werden kann. Nachdem die Welle-Nabe-Verbindung hergestellt ist, kann die Halteeinrichtung entriegelt werden, so dass der Zahnring 10 aufgrund der Kraftwirkung der Befestigungsstege "zurückgedreht" wird, wodurch die Vorspannung der Welle-Nabe-Verbindung erzeugt wird. Dies ist in Figur 13 dargestellt. Dabei ist klar ersichtlich, dass aufgrund der Verdrehung des Zahnringes ausgehend vom vorgespannten Zustand eine axiale Position des Zahnringes 10 und damit auch eine Eintauchtiefe der Haltenase 44 verändert ist. In dieser Position kann der verjüngte Halsbereich 44A nicht mehr in die Aussparung im Durchbruch 43 einrasten, so dass im Betrieb kein erneutes Verrasten stattfinden kann.

Soll diese Verbindung zur Wartung, Demontage oder Reparatur getrennt werden, so kann die axiale Position des Verzahnungsringes wieder verändert werden, dass ein erneutes Verrasten möglich ist.

Die vorstehende Beschreibung offenbart insbesondere, dass der ZMS-Ausgangsflansch mehrere entlang des Umfangs verteilte Durchgriffe aufweist, durch welche Befestigungsstege des Zahnringes (auch als Klemmfeder bezeichnet) hindurchgreifen können, wobei dann das freie Ende der Befestigungsstege, quasi auf der Rückseite des ZMS-Ausgangsflansches vernietet werden kann. Die Befestigungsstege sind dabei bevorzugt entlang des Umfanges des Zahnringes (der Klemmfeder) gleichverteilt angeordnet. Hierdurch wird ein Federweg des Zahnringes erhöht.

Die vorstehend beschriebenen Ausführungsbeispiele zeigen ebenfalls, dass entlang des Umfangs des ZMS-Ausgangsflansches mehrere Einhängemöglichkeiten benachbart zu den Durchgriffen vorgesehen werden können, wobei die Klemmfeder (der Zahnring) mehrere entlang dessen Umfang verteilte Haltenasen aufweist, welche in die im ZMS-Ausgangsflansch geschaffenen Einhängemöglichkeiten eingreifen können, abhängig von einer axialen und Winkellage des Zahnringes (der Klemmfeder). Durch eine Axialbewegung und die blattfederartige Anbindung der Klemmfeder (des Zahnringes) entsteht also eine Verdrehung der Klemmfeder (des Zahnringes), wodurch eine Montageposition ermöglicht wird, in der der Zahnring über die Haltenase und Einhängemöglichkeiten fixierbar ist. Wird diese Fixierung gelöst, so verdreht sich der Zahnring wieder und die Wellenabeverbindung wird vorgespannt. Das Lösen dieser Halteeinrichtung kann beispielsweise über Fliehkraft erreicht werden, wobei bei Erreichen einer bestimmten vordefinierten Fliehkraft die Einhängung mit den jeweils zuvor festgelegten (Drehzahl-)wert gelöst und die Klemmfeder und der ZMS-Ausgangsflansch dem Mitnehmerzahnring verspannen. Alternativ ist ein mechanisches Lösen möglich.

Soll die derartig vorgespannte Welle-Nabe-Verbindung wieder demontiert werden, so kann wiederum eine relative Axialbewegung von ZMS-Ausgangsflansch und Klemmfeder erzeugt werden, wobei aufgrund der blattfederartigen Anbindung wiederum eine Verdrehung zustande kommt, aufgrund deren die Verspannung der Verzahnung gelöst wird. Wird hierbei zudem vorgesehen, dass die Haltenase der Klemmfeder radial vorgespannt an der Ausnehmung im ZMS-Ausgangsflansch anliegt und wird ein bestimmter Abstand von Flansch und Klemmfeder unterschritten (d.h. eine bestimmte Verdrehung erreicht) klinkt sich die Haltenase wiederum in der Aussparung der Einhängung im ZMS-Ausgangsflansch ein, wodurch die Position der Klemmfeder wiederum fixiert wird. Die Verklemmung der Verzahnung ist hierdurch gelöst und die Demontage kann erfolgen.

Die vorstehend beschriebene Welle-Nabe-Verbindung kann dabei bei jeder Art von Verzahnung verwendet werden, wobei ein besonderer Vorteil der vorliegenden Welle-Nabe-Verbindung darin besteht, dass ein kraftfreies Montieren bzw. ein kraftfreies Demontieren möglich sind. Zudem ist ein momentengesteuertes Ausklinken der Halteeinrichtung der Verzahnung möglich. Anwendung kann die Welle-Nabe-Verbindung insbesondere auch bei Doppelkupplungen gerade im Bereich der Axialverzahnung mit einem ZMS finden.

Vorstehend wird also beschrieben, dass die Drehrichtung zur Vergrößerung der Zahnlücke zwischen Zahnring und ZMS-Ausgangsflanschverzahnung/ Mitnehmerzahnring zur Demontage (und nicht wie ebenfalls möglich zur Montage) verwendet wird. Die Montage wird hingegen dadurch gewährleistet, dass der Zahnring in Richtung ZMS-Ausgangsflansch vorgespannt und somit in eine Montageposition gebracht und dieser vorübergehend fixiert wird. Als Fixierung kann ein Element aus dem Zahnring oder dem Flansch geformt sein, das in das entsprechende korrespondierende Bauteil eingreift bzw. mit diesem eine formschlüssige Verbindung bildet. Die Zahnlücke in dieser Montageposition zwischen den Bauteilen kann dabei so groß gewählt werden, dass der Zahnkranz kraftlos in die Lücke gesteckt werden kann. Das zugehörige Sperrelement am Zahnring kann durch Fliehkraft oder mechanisch gelöst werden, so dass Zahnring und Flansch den Zahnkranz verspannen. Mit der vorliegenden Verspanneinrichtung kann die Drehrichtung zur Vergrößerung der Zahnlücke nun zur Demontage verwendet werden. Außerdem ist eine Montage der Welle-Nabe-Verbindung dadurch gewährleistet, dass der Zahnring in Richtung auf das Bauteil, an dem er nicht befestigt ist, vorgespannt und somit in einer Montageposition vorübergehend fixiert ist.

Alternativ hierzu kann auch ein kraftloses Demontieren realisiert werden. In diesem Falle wird die Drehrichtung zur Vergrößerung der Zahnlücke zur Montage verwendet. Zur Demontage wird dann der axiale Abstand zwischen Zahnring und Flansch verkleinert, dadurch beginnt sich der Zahnring zu drehen und die Verspannung wird gelöst. Wird ein festgelegter axialer Abstand der beiden Bauteile unterschritten, wird die Fixierung aktiviert und der Zahnring in dessen aktuellen Position gehalten. Die Teile können entsprechend kraftlos demontiert werden.

Gemäß einem bevorzugten Ausführungsbeispiel umfasst die Halteeinrichtung einerseits ein Sperrelement und andererseits eine Aussparung oder einen Durchbruch oder einen Vorsprung, wobei das Sperrelement in die Aussparung bzw. den Durchbruch hineingreift bzw. diesen durchgreift bzw. den Vorsprung hintergreift und so eine formschlüssige Verbindung in einer Montageposition der Verspanneinrichtung bildet. Dabei kann das Sperrelement aus dem Zahnring herausgeformt oder an diesem befestigt sein, wobei weiterhin die Aussparung bzw. der Durchbruch bzw. der Vorsprung an dem Element ausgebildet sein kann, an dem auch der Zahnring befestigt ist. Die Fixierung kann also unmittelbar aus dem Zahnring und dem Flansch geformt sein, wodurch eine Teileanzahl in vorteilhafter Weise reduziert ist.

Gemäß einem weiteren bevorzugten Ausführungsbeispiel ist eine Zahnlücke zwischen den Zähnen den Zahnrings zur Verzahnung des Nabenelements und/oder zur Verzahnung des Wellenelementes in der Montageposition so groß, dass der Zahnring kraftlos in die Lücke gesteckt werden kann, woraufhin dann das Sperrelement gelöst werden kann. Dabei kann das Sperrelement entweder durch Fliehkraft oder mechanisch lösbar sein, woraufhin dann der Zahnring eine Vorspannkraft zwischen Wellenelement und Nabenelement ausübt.

Um einen vergrößerten Federweg bei kleinerem axialem Bauraum der Vereinrichtung zu gewährleisten, kann gemäß einem kumulativ oder auch unabhängig realisierbaren Ausführungsbeispiel die Verspanneinrichtung für eine Welle-Naben-Verbindung in einer Drehmomentübertragungsvorrichtung in einem Antriebsstrang eines Fahrzeuges ein eine Verzahnung aufweisendes Wellenelement und ein eine Verzahnung aufweisendes Nabenelement umfassen, wobei zum Verspannen des Wellenelements mit dem Nabenelement ein eine Verzahnung aufweisender Zahnring vorgesehen ist, wobei in einem verspannten Zustand die Verzahnung des Zahnrings mit einem Winkel versetzt zur Verzahnung des Nabenelements und/oder zur Verzahnung des Wellenelements angeordnet ist, wobei der Zahnring einen Grundkörper und an diesem Grundkörper angeordnete Befestigungsstege umfasst, über welche der Zahnring am Nabenelement oder am Wellenelement befestigt ist, und wobei das Element, an dem der Zahnring befestigt ist, Durchbrüche aufweist, durch welche die Befestigungsstege hindurchgreifen. Insbesondere kann also der Flansch Durchgriffe besitzen, die einen vergrößerten Federweg bei verkleinertem oder gleichbleibendem axialen Bauraum gewährleisten.

Vorzugsweise sind zumindest die Befestigungsstege, vorteilhafter Weise aber auch der Zahnring insgesamt aus einem elastischen Material, wie einem Federblech, ausbildet.

Es ist weiterhin bevorzugt, die Befestigungsstege mittels einer Nietverbindung mit dem Nabehelement oder dem Wellenelement zu verbinden.

Die vorliegende Lehre umfasst zudem ein Drehmomentübertragungssystem umfassend eine Drehschwingungsdämpfungseinrichtung (wie Zweimassenschwungrad) und eine Kupplung wie Doppelkupplung, wobei die Drehschwingungsdämpfungseinrichtung und die Doppelkupplung über ein vorstehend beschriebenes Verspannsystem miteinander verbunden sind.

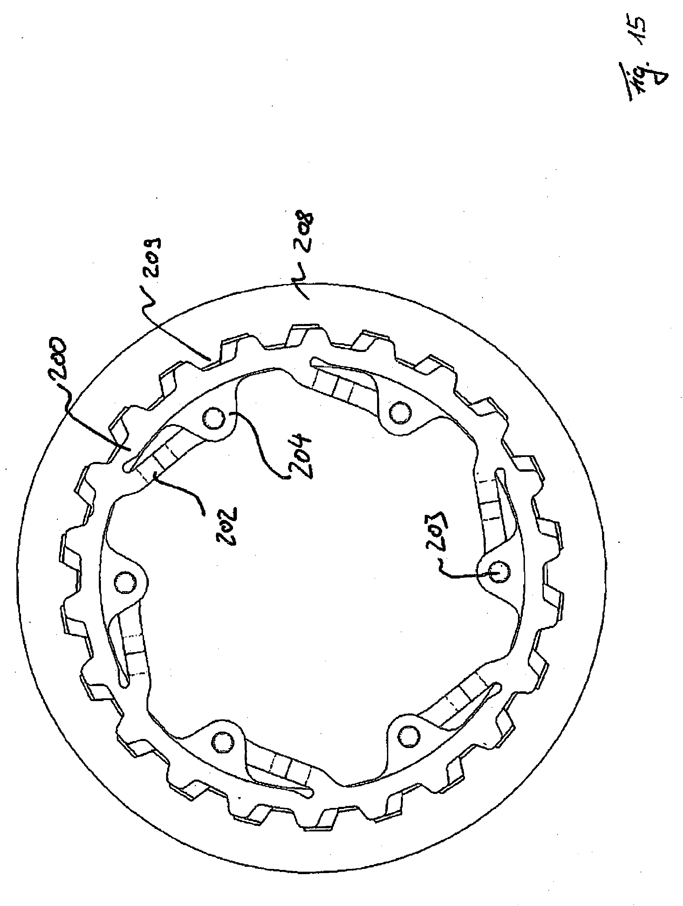

Fig. 14 zeigt eine perspektivische Darstellung eines weiteren Ausführungsbeispieles der Verspanneinrichtung mit einem Zahnring mit Außenverzahnung (die in eine Innenverzahnung des ZMS - Ausgangsflansches eingreift) und blattfederartigen Befestigungszungen (die an einer Welle befestigt sind, welche eine Außenverzahnung aufweist), wobei der innenverzahnte ZMS - Ausgangsflansch und die außenverzahnte Welle eine Steckverzahnung bilden, die über den außenverzahnten und innen angebundenen Zahnring aufgrund einer durch die Befestigungszungen erzeugten tangential wirkenden Kraft verspannt ist, und wobei aus Gründen einer übersichtlichen Darstellung der ZMS - Ausgangsflansch ausgeblendet ist. Darüber hinaus ist in Fig. 15 eine Draufsicht auf das Ausführungsbeispiel nach Fig. 14 gezeigt, wobei der ZMS - Ausgangsflansch durch ein kreisringförmiges Element symbolisiert ist

Der in Figur 14 und in Figur 15 gezeigte Zahnring umfasst einen kreisringförmigen Grundkörper 200, an dessen radialer Außenseite Zähne 201 ausgebildet sind, an dessen radial innerer Seite blattfederartige Befestigungszungen 202 angeordnet sind. Der Zahnring 200, 201, 202 ist vorliegend aus einem vergleichsweise dünnen Federstahlblech einteilig ausgebildet. Die blattfederartigen Verbindungsstege 202 sind über Nietverbindungen 203 mit einer Welle 204 verbunden. Die Welle 204 umfasst eine Außenverzahnung 205. In Figur 14 ist die Welle als Mitnehmerzahnkranz mit Außenverzahnung 205 und Grundkörper 206 und Verbindungsbereichen 207 dargestellt, wobei dieser Mitnehmerzahnkranz 204 mit einer Doppelkupplung, insbesondere einem Kupplungsdeckel einer Doppelkupplung verbunden sein kann. Alternativ zu dem hier gezeigten Mitnehmerkranz könnte auch eine Vollwelle oder eine Hohlwelle als "Welle" im Sinne der vorliegenden Erfindung vorgesehen sein.

Wie Figur 14 entnehmbar, weisen die Befestigungsstege 202 entlang ihrer Längsachse eine Krümmung mit einem axialen Anteil auf, also einem Anteil, welcher im wesentlichen parallel zur Achse der Kurbelwelle bzw. der Doppelkupplung bzw. zumindest einer der Getriebeeingangswellen verläuft. Hierdurch kommt in Richtung der Drehachse X der Kupplung betrachtet der Grundkörper 200 des Zahnringes in einer ersten zur Kupplungsdrehachse senkrechten Ebene zu liegen, wohingegen ein Befestigungsbereich der Befestigungsstege 202 in einer zweiten zur Kupplungsdrehachse X senkrechten Ebene zu liegen kommt. In Richtung der Kupplungsdrehachse X betrachtet erhält man also zwischen Grundkörper 200 und Befestigungsbereich 202B einen axialen Versatz. Vergleichbar dem in den Figuren 6 bis 13 dargestellten Ausführungsbeispiel ergibt sich eine Erhöhung des Federweges, ohne dass beim Ausführungsbeispiel nach Fig. 14, 15 Durchbrüche durch den Mitnehmerzahnkranz 204 notwendig würden. Über den gekrümmten Bereich 202A ergibt sich zudem die Möglichkeit, die Elastizität der Befestigungsstege 202 zu beeinflussen.

In Figur 14 ist der ZMS-Ausgangsflansch, als einem Beispiel der innenverzahnten Nabe, aus Gründen der Übersichtlichkeit der Zeichnung weggelassen worden. Dieser innenverzahnte ZMS-Ausgangsflansch ist in Figur 15 über einen weiteren Kreisring 208 mit Zähnen 209 dargestellt.

Beim Ausführungsbeispiel gemäß den Figuren 14 und 15 wird die Verspannung der Steckverzahnung zwischen Welle und Nabe also mit einem Zahnring (auch als Klemmfeder bezeichnet) mit Außenverzahnung realisiert. Der Zahnring umfasst neben der Außenverzahnung vorliegend 6 Befestigungsstege (auch als "Befestigungszungen" oder "Lappen" bezeichnet), die blattfederartig ausgeformt sind. Über diese Befestigungsstege wird die Klemmfeder mit der Welle verbunden. Bei Montage der Wellen-Nabe-Verbindung durch axiales Bewegen in Welle und Nabe relativ zueinander entlang der Drehachse X ergibt sich eine axiale Bewegung der Klemmfeder, dessen Befestigungsstege sich aber an der Welle abstützen, so dass sich die Klemmfeder relativ zur Welle verdrehen muss, wodurch sich eine Tangentialkraft und damit eine Verspannung von Welle und Nabe zueinander ergibt. Die Verdrehung des Zahnringes kommt dabei letztlich dadurch zustande, dass die Länge der blattfederartigen Anbindungen im Wesentlichen konstant bleibt.

Wird ein initialer Versatz (d. h. ein Versatz vor Montage der Wellen-Nabe-Verbindung) zwischen Außenverzahnung der Klemmfeder und Außenverzahnung der Welle vorgesehen, so wird die Klemmfeder erst bei der Montage der Nabe axial bewegt, so dass sich die Klemmfeder tangential zur Rotationsachse verdreht. Hierbei wird vorzugsweise die Tangentialkraft durch eine Montagephase der Nabe oder extern durch einen Monteur (durch ein Vorverdrehen der Klemmfeder, wie vorstehend beschrieben) erzeugt.

Dabei ist ein Versatz zwischen der Außenverzahnung der Klemmfeder und der Außenverzahnung der Welle so gestaltet, dass die Zahnbreite der Gegenverzahnung der Nabe größer ist als ein initialer Spalt zwischen den Außenverzahnungen von Klemmfeder und Welle. Die Nabe wird dann bei der Montage in die "zu kleine Zahnlücke" der Zähne von Klemmfeder und Welle geschoben und schiebt die Klemmfeder Richtung Welle. Die Klemmfeder verdreht sich daraufhin und vergrößert die Zahnlücke so, dass nach einem bestimmten Axialweg der komplette Zahn der Nabe fixiert wird. Die Klemmfeder klemmt dann durch seine tangentiale Vorspannung die Welle an die Nabe, wobei die Kraft der Vorspannung aus dem Versatz der Außenverzahnungen von Klemmfeder und Welle und der Zahnbreite der Gegenverzahnung der Nabe berechenbar und voreinstellbar ist.

Wie schon vorstehend beschrieben, kann eine Montagekraft reduziert werden, indem die Klemmfeder Richtung Welle vorgespannt und somit in einen Vormontagezustand gebracht werden kann, wobei die vorstehend bereits beschriebene Fixierung vorzugsweise aus der Klemmfeder selbst ausgeformt wird und mit einem oder mehreren zusätzlichen Elementen realisiert werden kann. Die Zahnlücke in der Außenverzahnung von Welle zu Klemmfeder ist in dieser Vormontageposition so groß, dass die Nabe kraftlos in diese Zahnlücke gesteckt werden kann, woraufhin dann dieses Fixierelement an der Klemmfeder entweder durch Fliehkraft/zusätzliches Moment oder mechanisch gelöst wird und Klemmfeder und Flansch sich verspannen.

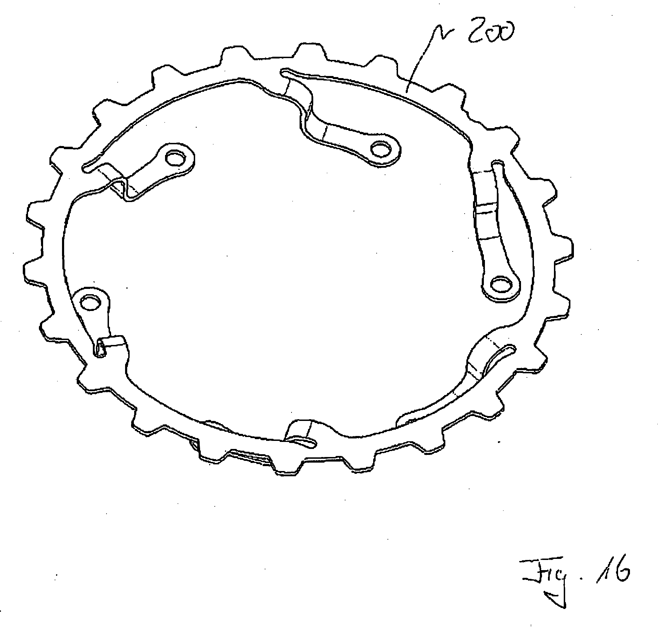

In Figur 16 ist noch eine perspektivische Darstellung ausschließlich des Zahnkranzes/der Klemmfeder gezeigt.

## Patentansprüche

1. Verspanneinrichtung einer Welle-Nabe-Verbindung in einer Drehmomentübertragungsvorrichtung in einem Antriebstrang eines Fahrzeuges, wobei die Welle-Nabe-Verbindung eine axiale Steckverzahnung zwischen einer außenverzahnten Welle und einer innenverzahnten Nabe umfasst **dadurch gekennzeichnet, daß** zum Verspannen von Welle und Nabe ein außenverzahnter Zahnring vorgesehen ist, wobei der außenverzahnte Zahnring einen Grundkörper (200) mit an der radial äußeren Seite ausgebildeten Zähnen (201) und an der radial inneren Seite des Grundkörpers vorgesehene und blattfederartig ausgebildete Befestigungszungen (202) umfasst, wobei die dem Grundkörper gegenüberliegenden Enden der blattfederartig ausgebildeten Befestigungszungen an der Welle (206) befestigt sind und die Zähne des Zahnringes in Zähne der Nabe eingreifen, und wobei durch Verdrehen des Zahnringes gegen eine Kraftwirkung der Befestigungszungen eine Verspannkraft auf die Welle-Nabe-Verbindung im montierten Zustand erzeugt ist, die über die Zähne und Befestigungszungen in die Welle-Nabe-Verbindung eingeleitet wird.

2. Verspanneinrichtung einer Welle-Nabe-Verbindung nach Anspruch 1, wobei zumindest die Befestigungszungen (202), vorzugsweise der Zahnring insgesamt, aus einem elastischen Material, wie einem Federblech, ausgebildet sind/ist.

3. Verspanneinrichtung einer Welle-Nabe-Verbindung nach Anspruch 1 oder 2, wobei die Befestigungszungen (202) mittels einer Nietverbindung (203) mit dem Wellenelement verbindbar sind.

4. Drehmomentübertragungssystem, umfassend eine Drehmomentdämpfungseinrichtung, wie Zweimassenschwungrad, und eine Doppelkupplung, wobei ein Ausgangsflansch der Drehmomentdämpfungseinrichtung eine Innenverzahnung und ein Eingangsteil bzw. ein Eingangsbereich der Doppelkupplung eine Außenverzahnung aufweisen, die miteinander eine Steckverzahnung bilden, die über eine Verspanneinrichtung nach einem der Ansprüche 1 bis 3 miteinander verbunden sind.

## Claims

1. Prestressing device of a shaft/hub connection in a torque transfer apparatus in a drive train of a vehicle, the shaft/hub connection comprising an axial spline-type gearing between an externally toothed shaft and an internally toothed hub, **characterized in that** an externally toothed toothed ring is provided for prestressing the shaft and hub, the externally toothed toothed ring comprising a basic body (200) with teeth (201) formed on the radially outer side and fastening tongues (202) provided on the radially inner side of the basic body and designed in the manner of leaf springs, the ends, opposite the basic body, of the fastening tongues designed in a manner of leaf springs being fastened to the shaft (206), and the teeth of the toothed ring engaging into teeth of the hub, and, by the toothed ring being rotated counter to the action of the force of the fastening tongues, a prestressing force being generated on the shaft/hub connection in the assembled state, the said prestressing force being introduced into the shaft/hub connection via the teeth and fastening tongues.

2. Prestressing device of a shaft/hub connection according to Claim 1, at least the fastening tongues (202), preferably the toothed ring overall, being formed from an elastic material, such as spring sheet metal.

3. Prestressing device of a shaft/hub connection according to Claim 1 or 2, the fastening tongues (202) being connectable to the shaft element by means of a riveted joint (203).

4. Torque transfer system, comprising a torque damping device, such as a two-mass flywheel, and a double clutch, an output flange of the torque damping device having an internal toothing and an input part or an input region of the double clutch having an external toothing, the said internal toothing and the said external toothing forming with one another a spline-type gearing and being connected to one another via a prestressing device according to one of Claim 1 to 3.

## Revendications

1. Dispositif de serrage d'un accouplement arbre-moyeu dans un dispositif de transfert de couple dans une chaîne cinématique d'un véhicule, l'accouplement arbre-moyeu comprenant une denture d'enfichage axiale entre un arbre à denture extérieure et un moyeu à denture intérieure, **caractérisé en ce que** pour le serrage de l'arbre et du moyeu, une couronne dentée à denture extérieure est prévue, la couronne dentée à denture extérieure comprenant un corps de base (200) avec des dents (201) réalisées sur le côté radialement extérieur et des langues de fixation (202) prévues sur le côté radialement intérieur du corps de base et réalisées sous forme de ressort à lame, les extrémités des langues de fixation réalisées sous forme de ressort à lame, opposées au corps de base, étant fixées à l'arbre (206) et les dents de la couronne dentée s'engrenant dans les dents du moyeu, et par rotation de la couronne dentée à l'encontre de l'action d'une force des langues de fixation, une force de serrage étant produite sur l'accouplement arbre-moyeu dans l'état monté, laquelle est introduite par le biais des dents et des langues de fixation dans l'accouplement arbre-moyeu.

2. Dispositif de serrage d'un accouplement arbre-moyeu selon la revendication 1, dans lequel au moins les langues de fixation (202), de préférence la couronne dentée dans son ensemble, sont/est réalisée(s) à partir d'un matériau élastique, tel qu'une tôle à ressort.

3. Dispositif de serrage d'un accouplement arbre-moyeu selon la revendication 1 ou 2, dans lequel les langues de fixation (202) peuvent être connectées au moyen d'une connexion par rivets (203) à l'élément d'arbre.

4. Système de transfert de couple, comprenant un dispositif d'amortissement de couple, tel qu'un volant d'inertie à deux masses, et un double accouplement, une bride de sortie du dispositif d'amortissement de couple présentant une denture intérieure et une partie d'entrée ou une région d'entrée du double accouplement présentant une denture extérieure, lesquelles forment l'une avec l'autre une denture d'enfichage et sont connectées l'une à l'autre par le biais d'un dispositif de serrage selon l'une quelconque des revendications 1 à 3.
